# FASCICULE DE BREVET EUROPEEN

(11) **EP 1 334 780 B1**
(45) Date de publication et mention de la délivrance du brevet: **23.08.2006**
(21) Numéro de dépôt: 03447017.9
(22) Date de dépôt: 24.01.2003
(51) Int. Cl.: B09C 1/00, E21B 43/38, B01D 17/02

(54) **Dispositif et procédé d'écrémage de polluants tels que des hydrocarbures pour nappes souterraines**
Verfahren und Vorrichtung zum Abschöpfen von Schadstoffen wie Kohlenstoffen aus Grundwasser
Method and device for skimming off pollutants such as hydrocarbons from groundwater

(30) Priorité: 07.02.2002 BE 200200071
(43) Date de publication de la demande: 13.08.2003
(73) Titulaire: ODS International, 5330 Assesse (BE)
(72) Inventeur: Lesuisse, Philippe, 5330 Assesse (BE)
(74) Mandataire: Van Malderen, Michel

(56) Documents cités:
- US-A- 4 663 037
- US-A- 4 998 585
- US-A- 5 326 458
- US-A- 5 739 440
- US-A- 5 897 773

## Description

### Objet de l'invention

La présente invention se rapporte à un dispositif et à un procédé d'écrémage de nappes d'eau souterraines polluées notamment par des hydrocarbures.

### Arrière-plan technologique et état de la technique

Dans le cadre de la protection de l'environnement et dans celui des nappes phréatiques en particulier, il est devenu indispensable de disposer d'outils de dépollution performants pour assainir les eaux polluées par des hydrocarbures.

Lorsque des fuites sont constatées sur des réservoirs d'hydrocarbures, en particulier sur des installations industrielles, celles-ci sont bien souvent déjà anciennes et ont donné lieu à des percolations importantes d'hydrocarbures vers les nappes phréatiques.

Les hydrocarbures ont généralement une densité inférieure à 1 g/cm³ et flottent donc à la surface de l'eau. Ces couches flottantes peuvent avoir différentes épaisseurs et peuvent varier d'une fraction de mm à plusieurs dm. Il est donc essentiel de disposer d'un outil qui garantit un écrémage efficace du surnageant décanté pour une dépollution des nappes d'eau. L'essentiel est d'éviter de créer des émulsions lors du pompage effectué sur celles-ci. En effet, les émulsions ont des densités très variables et sont par nature difficiles à traiter.

Historiquement, les pays maritimes industrialisés où les nappes phréatiques affleurent la surface du sol ont été les premiers confrontés à la problématique de la dépollution. C'est ainsi que les Pays-Bas ont été les pionniers dans ce domaine. Dans ce pays, la moindre contamination est préjudiciable à la qualité de l'eau car les hydrocarbures s'étendent rapidement horizontalement et contaminent des surfaces importantes.

A ce jour, différentes techniques de récupération des hydrocarbures en sous-sol sont connues et sont essentiellement basées sur, d'une part, un constat de la mesure de niveau de la nappe par rapport au niveau du sol au départ d'un piézomètre et, d'autre part, la mesure de la couche flottante qui s'effectue à l'aide d'une sonde interface et assure une précision de l'ordre du millimètre.

Les techniques d'écrémage ont longtemps été effectuées à partir d'un pompage classique au départ de puits existants. Cette technique ne permet néanmoins pas d'assurer la récupération totale des hydrocarbures et présente l'inconvénient de générer des quantités d'eau importantes qu'il faut alors traiter en aval.

D'autres techniques réalisent une extraction à l'aide d'une pompe immergée munie d'un conduit fixe qui assure l'aspiration en surface. L'ensemble est suspendu dans le puits à une hauteur fixe et des sondes de niveau commandent le fonctionnement de la pompe. Ce système ne tient néanmoins pas compte des variations de niveau de la nappe au cours du temps. En cas de diminution du niveau de la nappe, l'équipement ne se met pas en service et en cas de montée de niveau, l'équipement démarre jusqu'à ramener le niveau vers la sonde de niveau bas. Si le débit de nappe est supérieur au débit de la pompe, celle-ci fonctionne en permanence sans pouvoir diminuer le niveau de la nappe et, à ce moment, aucun produit surnageant n'est enlevé.

D'autres systèmes sont munis de flotteurs et de filtres et sont capables de récupérer une couche flottante de polluants homogènes et légers du type essence ou mazout. Les impuretés ou les émulsions entravent cependant rapidement le fonctionnement de ce type de pompes à cause du colmatage du filtre. La maintenance de ce type de système s'avère alors très coûteuse.

D'autres technologies utilisent l'énergie pneumatique et à l'aide d'un compresseur on envoit de l'air comprimé à travers un tube vers la nappe d'eau au départ d'un puits préalablement foré et tubé, l'éjecteur étant plongé dans le liquide à un niveau bien précis. La partie supérieure de ce tube doit se situer au niveau de la nappe. Par gravité, le liquide remplit alors le tube et au bout de quelques minutes, de l'air comprimé est amené par une conduite appropriée et le liquide est expulsé par le conduit de sortie. Ce principe ne tient néanmoins pas non plus compte de la variation du niveau de la nappe au cours du temps.

Il existe une littérature assez fournie sur la dépollution des nappes phréatiques, nous citerons à ce titre les documents WO 00/03095, les brevets américains 5,945,973 et 5,928,520 où l'on décrit des écrémeurs d'hydrocarbures avec des collecteurs à rubans.

D'autres systèmes à flotteurs, utilisés pour les écrémages sur plan d'eau ouvert existent également, comme montré sur le site www.foilex.com. Leur grand diamètre ne permet cependant pas l'utilisation pour la dépollution de nappes profondes dans des conditions économiquement acceptables à cause du diamètre du puits à forer.

La société Silex International (www.silexinternational.com) commercialise également des systèmes comme décrits précédemment. Ils sont essentiellement basés sur l'actionnement de clapets par un flotteur qui met alors en route l'arrivée d'air comprimé afin d'expulser l'hydrocarbure récolté.

Les inconvénients des technologies précitées sont une consommation énergétique élevée, comme par exemple celle des compresseurs pour les principes de fonctionnement à éjection ainsi qu'une maintenance considérable lorsque l'équipement comporte des clapets, des sondes et des câbles électriques avec une régulation pour la mise à niveau extrêmement complexe. Ces équipements fonctionnent mal en période de gel et leur prix devient rapidement prohibitif au fur et à mesure que le nombre de puits se multiplie. Il est important de signaler que les conditions de travail dans lesquelles ce type de dépollution s'effectue nécessite un matériel robuste et simple, car il travaille généralement sans surveillance durant des mois. Toute tentative de dépollution complète se basant sur un matériel technologiquement trop sophistiqué est, à long terme, voué à l'échec.

L'inconvénient essentiel de toutes les techniques utilisées jusqu'à présent est cependant qu'il n'y a pas une adaptation naturelle aux variations de niveau de l'interface entre la nappe d'hydrocarbures et l'eau, ce qui entraîne souvent la formation d'une émulsion qui devient ensuite difficile à traiter. Par adaptation naturelle, nous entendons une adaptation automatique résultant de la flottaison et ne nécessitant aucune régulation électronique du positionnement en fonction du niveau.

Le document US-A-4,663,037 divulgue un système de flotteur apte à être placé dans un trou de forage sur l'interface d'une nappe phréatique polluée ; un tuyau d'aspiration d'hydrocarbures est attaché au flotteur de ce dispositif qui, par sa densité intermédiaire entre les hydrocarbures et l'eau se place approximativement à l'interface eau/hydrocarbures. Ce dispositif ne permet cependant pas une adaptation tout à fait libre du niveau du flotteur à cause du tube d'aspiration des hydrocarbures attaché à celui-ci et il n'ambitionne d'ailleurs pas une dépollution complète des nappes phréatiques.

Par ailleurs, aucun système n'est suffisamment précis et sensible pour être capable de prélever les derniers millimètres d'hydrocarbures flottant sur la nappe d'eau. La dépollution reste alors incomplète et donc inachevée.

### Buts de l'invention

La présente invention vise à proposer un dispositif destiné à l'écrémage de polluants, en particulier d'hydrocarbures pour les nappes d'eau souterraines, capable de se positionner en fonction de la flottaison de façon précise au niveau de l'interface hydrocarbures-eau.

Le dispositif de la présente invention installé dans un puits préalablement foré pour atteindre le niveau de la nappe phréatique, doit permettre d'écrémer la partie supérieure des nappes d'eau en sous-sol et assure ainsi la récupération totale du liquide surnageant même de faible épaisseur et quelle que soit la variation de niveau de la nappe d'eau.

Elle vise en particulier à proposer un procédé capable d'écumer les couches flottantes d'hydrocarbures d'une épaisseur inférieure à 1 mm en milieu industriel, comme par exemple les ports pétroliers ou les complexes pétrochimiques où l'étendue de la couche flottante d'hydrocarbures peut atteindre des surfaces de plusieurs hectares. Ces zones sont généralement implantées près de fleuves importants ou encore près de la mer, endroits où le niveau de la nappe phréatique peut varier de manière importante à cause des marées ou des écluses et l'invention, dans une forme d'exécution préférée vise à tenir compte de cette particularité.

### Résumé de l'invention

La présente invention divulgue un dispositif d'écrémage de polluants tels que des hydrocarbures pour nappes d'eau souterraines comprenant au moins un flotteur et au moins un tuyau d'aspiration des hydrocarbures, caractérisé en ce que celui-ci comprend en outre au moins un orifice de collecte et au moins une rainure sur la partie supérieure, permettant l'accès dudit hydrocarbure audit orifice de collecte et en ce que ledit flotteur possède une densité intermédiaire entre la densité de l'eau et la densité des hydrocarbures à récupérer lui permettant de se positionner à l'interface entre l'eau et les hydrocarbures flottants sur celle-ci.

Selon l'invention, le dispositif comporte en outre au moins un tuyau d'aspiration d'eau pour former un cône de rabattement.

Un des éléments clé de la présente invention montre que les tuyaux d'aspiration des hydrocarbures et d'aspiration d'eau servent en même temps de glissière audit flotteur.

Toujours selon l'invention, le flotteur est réalisé essentiellement en polyéthylène haute densité (HDPE) d'une densité pouvant varier dans une plage de 0,94 à 0,97 g/cm³.

Avantageusement, le tuyau d'aspiration communique par l'intermédiaire d'une pièce d'assemblage inférieure avec un tuyau collecteur communiquant avec l'orifice de collecte et constitue un ensemble pour l'aspiration des hydrocarbures.

Une autre caractéristique de l'invention est que le flotteur est constitué par des éléments modulaires.

L'invention divulgue par ailleurs un procédé de dépollution de nappes d'eau caractérisé en ce qu'un hydrocarbure flottant sur une nappe d'eau est aspiré vers une unité de collecte centrale par l'intermédiaire d'un tuyau flexible raccordé à un dispositif comprenant un flotteur comprenant une rainure et un orifice de collecte, la partie supérieure dudit flotteur se maintenant à l'interface hydrocarbures/eau en étant guidé sur les glissières et, et acheminant lesdits hydrocarbures via un tuyau collecteur raccordé à un tuyau d'aspiration par l'intermédiaire d'un canal de transfert se trouvant dans un profil d'assemblage.

Dans un mode d'exécution particulier de l'invention, l'eau est aspirée à travers un tuyau d'aspiration d'eau pour former un cône de rabattement permettant de faciliter la récolte des hydrocarbures.

Enfin, l'invention décrit l'utilisation du dispositif d'écrémage pour la récupération d'hydrocarbures infiltrés dans des nappes phréatiques.

### Brève description des figures

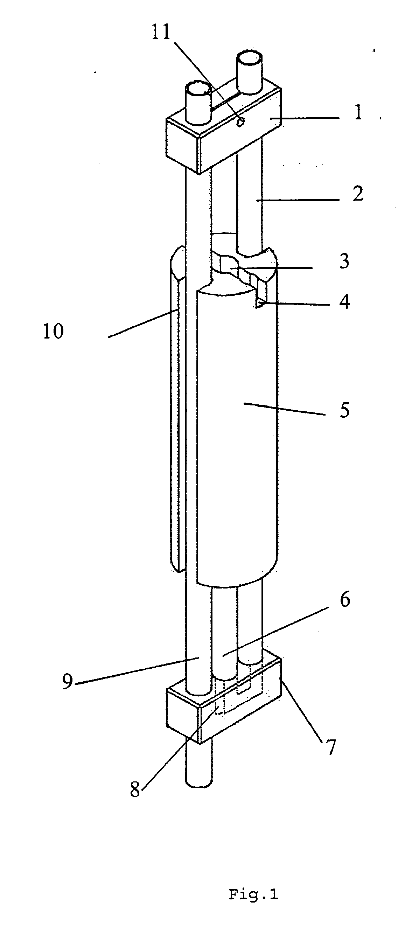

La figure 1 représente une vue en perspective du dispositif de l'invention.

La figure 2 représente une vue schématique de fonctionnement d'un procédé de dépollution utilisant le dispositif selon la figure 1 installée dans un forage.

### Description détaillée d'une forme d'exécution préférée de l'invention

La présente invention est basée sur le principe que les poids spécifiques de polluants tels que les hydrocarbures sont généralement inférieurs à 1 g/cm³ et que ceux-ci flottent donc à la surface de l'eau. L'écrémeur pour nappes souterraines trouvant son application dans la récupération d'une couche de surnageants polluants en général et en particulier des hydrocarbures, au niveau d'une nappe d'eau en sous-sol ou en nappe phréatique, cette couche flottante est observée au préalable par un piézomètre de contrôle dans un puits foré et équipé d'un tube crépiné 20.

Le dispositif de la présente invention représenté dans les figures comprend un profil cylindrique en polyéthylène haute densité appelé flotteur 5 dont le poids spécifique est tel que la partie supérieure va se positionner à l'interface entre la couche d'hydrocarbures 15 insolubles dans l'eau et la nappe d'eau. Généralement, le poids spécifique du polyéthylène « haute densité » utilisé varie selon les catalyseurs utilisés de 0.94 à 0.97 gr/cm³ mais se situe de préférence à environ 0,96 gr/cm³, celui des hydrocarbures à environ 0,8 gr/cm³ et celui de l'eau à 1 gr/cm³. Une autre résine ayant un poids spécifique similaire et de bonnes propriétés de résistance peut également convenir.

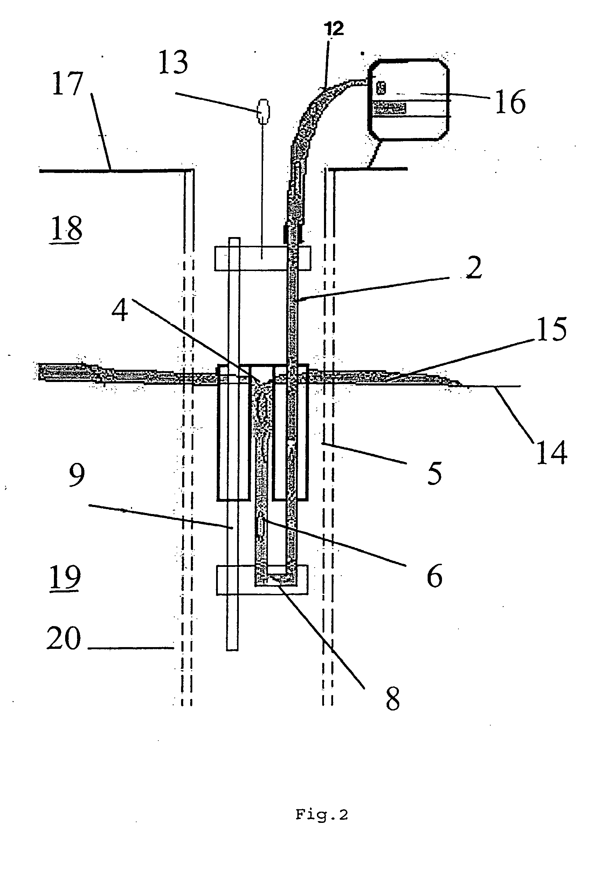

Le flotteur 5 est muni de deux rainures extérieures de guidage 10 et d'un orifice de collecte 3 traversant le flotteur selon son diamètre. Les dimensions du flotteur 5 doivent être inférieures au diamètre du puits de réception 20, qui peut être par exemple un puits de 4 pouces (114mm) (figure 2).

Deux glissières constituées par les tuyaux d'aspiration d'eau 9 et d'hydrocarbures 2 ou par des moyens équivalents guident le flotteur 5 qui va pouvoir suivre dans le puits 20 les variations de niveau de la nappe locale. Le polyéthylène haute densité est le matériau idéal pour ce type de flotteur car hormis sa densité intermédiaire entre les polluants et l'eau il résiste bien aux agressions (dissolution, ramollissement, gonflement) de la plupart des hydrocarbures, c'est d'ailleurs la raison pour laquelle il est utilisé tout comme le polypropylène dans la fabrication des réservoirs de voitures.

Le flotteur 5 est réalisé de préférence de façon modulaire de façon à pouvoir faire considérablement varier la longueur du dispositif en empilant des modules. Il en est de même pour la longueur des glissières formées par les tuyaux d'aspiration d'eau 9 et d'aspiration d'hydrocarbures 2, car le dispositif une fois en place doit pouvoir s'adapter automatiquement aux fluctuations extrêmes de la hauteur de la nappe d'eau durant des mois sans aucune surveillance. Comme nous l'avons précisé plus haut, le niveau de cette nappe peut varier considérablement selon les endroits et les époques de l'année, notamment sous l'influence des précipitations des marées ou à cause d'écluses situées à proximité.

Les deux tubes servant également de glissières 2 et 9 sont rendues solidaires respectivement à la tête et à la base par l'intermédiaire d'un profil d'assemblage supérieur 1 et inférieur 7, un tube de collecte 6 étant implanté au centre de la pièce d'assemblage inférieure 7, dont la longueur correspond approximativement à la moitié de la hauteur de coulissement sur les glissières. La pièce de tête 1 est munie d'un moyen approprié tel qu'un orifice 11 qui va servir à l'accrochage du dispositif d'écrémage à une chaîne en vue de le maintenir dans le puits à une hauteur médiane entre le niveau maximum et minimum de la nappe d'eau, permettant ainsi d'intégrer les variations du niveau de celle-ci dans le temps.

Toutes les pièces métalliques utilisées dans le dispositif de la présente invention sont inoxydables pour des raisons évidentes de résistance à la corrosion dans le temps.

Au départ, il faut donc choisir un dispositif d'écrémage d'un diamètre légèrement inférieur au diamètre du puits foré 20. Une des deux glissières dans la forme représentée sert de tube de transfert 2 par aspiration du produit provenant de l'orifice de collecte 3 du flotteur. Ce produit sera acheminé via le tube de collecte 6 et le canal 8 vers le tube d'aspiration 2 qui est raccordé par un tube flexible 12 vers une unité de collecte centrale 16. L'ensemble du dispositif est alors descendu dans le puits par l'intermédiaire d'une chaîne de maintien de position 13 jusqu'à ce qu'il soit en contact avec le niveau de l'eau. La distance nécessaire a été en général préalablement mesurée. Le dispositif, grâce à son flotteur 5, suit les variations de niveau de l'interface eau-polluant et donc le niveau de la nappe d'eau locale. Le flotteur 5 est parfaitement capable de s'adapter à ce niveau car il est maintenu et guidé par les deux glissières 2 et 9. On peut également forer plusieurs puits et installer un dispositif selon l'invention dans chacun d'eux.

En cas de présence d'une couche flottante d'hydrocarbures 15, le flotteur 5 du dispositif de l'invention va se stabiliser à l'interface eau-hydrocarbure grâce à sa densité et à son profil.

Par l'intermédiaire d'une unité de pompage adaptée 16, le produit sera donc aspiré au travers du dispositif de l'invention.

Selon une forme d'exécution complémentaire de l'invention, un second tube 9 permet simultanément d'aspirer l'eau de la nappe phréatique et de former un cône d'aspiration encore appelé cône de rabattement. Celui-ci résulte en un abaissement local lié au débit de la nappe d'eau entraînant ainsi un épaississement local de la nappe de polluant. Ces cônes permettent d'accélérer la séparation de phases entre la couche eau et la couche hydrocarbures, ce qui facilite la récupération de ceux-ci.

Si la phase de pompage sur un puits se prolonge, en fin de dépollution, de l'eau et de l'air vont être aspirés. Durant cette dernière phase, une proportion d'eau plus importante est aspirée et sera transférée via une unité de séparation classique (non représentée).

Le dispositif peut fonctionner aussi bien en continu que de manière intermittente par une unité de commande pilotée en fonction de divers équipements de mesure, en particulier en fonction du niveau et de l'importance de dispositifs d'alarme sonores ou visuels et de commande à distance, notamment.

### Légende

1. Profil d'assemblage supérieur
2. Tube d'aspiration d'hydrocarbures servant également de glissière pour le flotteur
3. Orifice du flotteur pour collecte hydrocarbures
4. Rainure de liaison sur partie supérieure du flotteur positionnée à l'interface eau/hydrocarbures
5. Flotteur
6. Tube de collecte des hydrocarbures (tuyau collecteur)
7. Profil d'assemblage inférieur comprenant le canal de transfert vers le tube de collecte des hydrocarbures collectés
8. Canal de transfert vers le tube central tube d'aspiration
9. Tube d'aspiration d'eau pour créer un rabattement supplémentaire servant également de glissière pour le flotteur
10. Rainure extérieure de guidage
11. Orifice pour accrochage du dispositif à une chaîne
12. Tube d'aspiration flexible
13. Chaîne de maintien de position dans le puits
14. Niveau de la nappe d'eau
15. Couche flottante d'hydrocarbures
16. Unité de collecte centrale avec cuve sous vide
17. Niveau du sol
18. Zone non saturée
19. Zone saturée
20. Tube crépiné installé dans un forage

## Revendications

1. Dispositif d'écrémage d'hydrocarbures pour nappes d'eau souterraines, comprenant un flotteur (5) et un tuyau d'aspiration des hydrocarbures (2), ledit flotteur (5) étant muni d'au moins un orifice de collecte (3) et possédant une densité intermédiaire entre la densité de l'eau et la densité des hydrocarbures à récupérer
**caractérisé en ce que**
ledit flotteur comprend en outre au moins une rainure (4) sur la partie supérieure permettant l'accès dudit hydrocarbure audit orifice de collecte (3) et au moins une rainure extérieure de guidage (10) permettant audit flotteur de coulisser par rapport au tuyau d'aspiration des hydrocarbures (2), ledit tuyau d'aspiration des hydrocarbures servant en même temps de glissière audit flotteur (5) permettant ainsi à la rainure (4) de se positionner à l'interface entre l'eau et les hydrocarbures flottants sur celle-ci.

2. Dispositif d'écrémage selon la revendication 1 **caractérisé en ce qu'**il comporte en outre au moins un tuyau d'aspiration d'eau (9), pour former un cône de rabattement, ledit tuyau d'aspiration d'eau servant en même temps de glissière audit flotteur (5) lui permettant de se positionner à l'interface entre l'eau et les hydrocarbures flottants sur celle-ci.

3. Dispositif d'écrémage selon la revendications 1, **caractérisé en ce que** ledit flotteur (5) est réalisé en polyéthylène haute densité (HDPE) d'une densité pouvant varier dans une plage de 0,94 à 0,97 g/cm³.

4. Dispositif d'écrémage selon la revendication 1, **caractérisé en ce que** le tuyau d'aspiration (2) communique par l'intermédiaire d'une pièce d'assemblage inférieure (7) avec un tuyau collecteur (6) communiquant avec l'orifice de collecte (3) et constitue un ensemble pour l'aspiration des hydrocarbures.

5. Dispositif d'écrémage selon la revendications 1, **caractérisé en ce que** ledit flotteur (5) comporte des éléments modulaires.

6. Procédé de dépollution de nappes d'eau à l'aide du dispositif de la revendication 1 **caractérisé en ce que :**
- l'hydrocarbure flottant sur la nappe d'eau souterraine est aspiré vers une unité de collecte centrale (16) par l'intermédiaire d'un tuyau flexible (12) raccordé au dispositif de la revendication 1 ;
- le flotteur (5) se maintient à l'interface hydrocarbures/eau en étant guidé sur le tuyau d'aspirationdes hydrocarbures (2) ledit tuyau servant de glissière audit flotteur (5)

7. Procédé de dépollution de nappes d'eau à l'aide du dispositif de la revendication 2 **caractérisé en ce que** l'eau est aspirée à travers le tuyau d'aspiration d'eau (9) pour former un cône de rabattement permettant de faciliter la récolte des hydrocarbures.

8. Utilisation du dispositif d'écrémage de la revendication 1 ou 2 pour la récupération d'hydrocarbures infiltrés dans des nappes phréatiques.

## Claims

1. Device for skimming off hydrocarbons for groundwater, comprising a float (5) and a hydrocarbon-suction pipe (2), said float (5) being provided with at least one collection aperture (3) and having a density that is intermediate between the density of water and the density of the hydrocarbons to be recovered, **characterised in that** said float moreover comprises at least one groove (4) in its upper part allowing access for said hydrocarbon- to said collection aperture (3) and at least one outer guiding groove (10) allowing said float to slide relative to the hydrocarbon-suction pipe (2), said hydrocarbon suction pipe acting at the same time as a slide for said float (5), which thus allows the groove (4) to be positioned at the interface between the water and the hydrocarbons floating on it.

2. Skimming device according to Claim 1, **characterised in that** it moreover comprises at least one water-suction pipe (9) in order to form a drawdown cone, said water-suction pipe acting at the same time as a slide for said float (5) and allowing it to be positioned at the interface between the water and the hydrocarbons floating on it:

3. Skimming device according to Claim 1, **characterised in that** said float (5) is made of high-density polyethylene (HDPE) with a density that may vary within a range of 0.94 to 0.97 g/cm³.

4. Skimming device according to Claim 1, **characterised in that** the suction pipe (2) is connected by a lower assembling part (7) to a collection pipe (6) that is connected to the collection aperture (3) and forms an assembly for the suction of the hydrocarbons.

5. Skimming device according to Claim 1, **characterised in that** said float (5) comprises modular elements.

6. Method for groundwater pollution control by means of the device according to Claim 1, **characterised in that**:
- the hydrocarbon floating on the groundwater is sucked towards a central collection unit (16) by means of a flexible pipe (12) attached to the device of Claim 1;
- the float (5) is maintained at the hydrocarbon/water interface by being guided along the hydrocarbon-suction pipe (2), said pipe acting as a slide for said float (5).

7. Method for groundwater pollution control by means of the device according to Claim 2, **characterised in that** the water is sucked through the water-suction pipe (9) in order to form a drawdown cone allowing to facilitate the collection of the hydrocarbons.

8. Use of the skimming device according to Claim 1 or 2 for collecting hydrocarbons that have penetrated groundwater.

## Patentansprüche

1. Vorrichtung zum Abschöpfen von Kohlenwasserstoffen für unterirdische Wasserflächen, die einen Schwimmer (5) und ein Kohlenwasserstoff-Saugrohr (2) umfasst, wobei der besagte Schwimmer (5) mit mindestens einer Sammelöffnung (3) versehen ist und eine Dichte aufweist, die zwischen der Wasserdichte und der Dichte der abzuschöpfenden Kohlenwasserstoffe liegt, **dadurch gekennzeichnet, dass** der besagte Schwimmer außerdem mindestens eine Nut (4) am oberen Teil aufweist, durch die der besagte Kohlenwasserstoff zur besagten Sammelöffnung (3) gelangen kann, und mindestens eine äußere Führungsnut (10), durch die sich der besagte Schwimmer in Bezug auf das Kohlenwasserstoff-Saugrohr (2) verschieben kann, wobei das besagte Kohlenwasserstoff-Saugrohr dem besagten Schwimmer (5) gleichzeitig als Gleitschiene dient, so dass sich die Nut (4) an der Schnittstelle zwischen dem Wasser und den obenauf schwimmenden Kohlenwasserstoffen positionieren kann.

2. Abschöpfvorrichtung nach Anspruch 1, **dadurch gekennzeichnet, dass** sie außerdem mindestens ein Wasser-Saugrohr (9) umfasst, um einen Absenkkegel zu bilden, wobei das besagte Wasser-Saugrohr dem besagten Schwimmer (5) gleichzeitig als Gleitschiene dient, so dass er sich an der Schnittstelle zwischen dem Wasser und den obenauf schwimmenden Kohlenwasserstoffen positionieren kann.

3. Abschöpfvorrichtung nach Anspruch 1, **dadurch gekennzeichnet, dass** der besagte Schwimmer (5) aus Polyethylen hoher Dichte (HDPE) mit einer Dichte zwischen 0,94 und 0,97 g/cm³ besteht.

4. Abschöpfvorrichtung nach Anspruch 1, **dadurch gekennzeichnet, dass** das Saugrohr (2) mittels eines unteren Verbindungsteils (7) mit einem Sammelrohr (6) in Verbindung steht, das mit der Sammelöffnung (3) in Verbindung steht, und eine Einheit zum Ansaugen der Kohlenwasserstoffe bildet.

5. Abschöpfvorrichtung nach Anspruch 1, **dadurch gekennzeichnet, dass** der besagte Schwimmer (5) Modularbauteile umfasst.

6. Verfahren zur Dekontamination von Wasserflächen mit Hilfe der Vorrichtung nach Anspruch 1, **dadurch gekennzeichnet, dass**:
- der auf der unterirdischen Wasserfläche schwimmende Kohlenwasserstoff durch einen Schlauch (12), der mit der Vorrichtung nach Anspruch 1 verbunden ist, in eine zentrale Sammeleinheit (16) gesaugt wird;
- der Schwimmer (5) an der Schnittstelle zwischen Kohlenwasserstoffen und Wasser gehalten wird, indem er mittels des Kohlenwasserstoff-Saugrohrs (2) geführt wird; dieses Rohr dient dem besagten Schwimmer (5) als Gleitschiene.

7. Verfahren zur Dekontamination von Wasserflächen mit Hilfe der Vorrichtung nach Anspruch 2, **dadurch gekennzeichnet, dass** das Wasser durch das Wasser-Saugrohr (9) angesaugt wird, um einen Absenkkegel zu bilden, der das Abschöpfen der Kohlenwasserstoffe vereinfacht.

8. Verwendung der Abschöpfvorrichtung nach Anspruch 1 oder 2 zur Rückgewinnung von im Grundwasser infiltrierten Kohlenwasserstoffen.
